(19) **Europäisches Patentamt**

**European Patent Office**

**Office européen des brevets**

(11) **EP 1 199 818 B1**

(12) **FASCICULE DE BREVET EUROPEEN**

(45) Date de publication et mention
de la délivrance du brevet:
**15.12.2004 Bulletin 2004/51**

(51) Int Cl.⁷: **H04B 7/185**

(21) Numéro de dépôt: **01402565.4**

(22) Date de dépôt: **04.10.2001**

(54) **Procédé de gestion des ressources radio dans un reseau de telecommunication interactif**

Verfahren zur Steuerung der Funkmitteln in einem interaktiven Telekommunikationsnetz

Method of control of radio resources in an interactive telecommunication network

(84) Etats contractants désignés:
**AT BE CH CY DE DK ES FI FR GB GR IE IT LI LU
MC NL PT SE TR**

(30) Priorité: **16.10.2000 FR 0013212**

(43) Date de publication de la demande:
**24.04.2002 Bulletin 2002/17**

(73) Titulaire: **ALCATEL
75008 Paris (FR)**

(72) Inventeurs:
 • **Lapaille, Cédric
 78400 Chatou (FR)**
 • **Espanol-Collet, Isabelle
 92500 Reuil (FR)**
 • **Magnier, Anne
 75011 Paris (FR)**
 • **Laval, Régis
 78000 Versailles (FR)**
 • **Sehedic, Yann
 92170 Vanves (FR)**

(74) Mandataire: **Fournier, Michel Robert Marie et al
Compagnie Financière Alcatel
Département de Propriété Industrielle,
5, rue Noel Pons
92734 Nanterre Cedex (FR)**

(56) Documents cités:
 **EP-A- 0 994 577     WO-A-00/60770
 US-A- 6 055 431     US-A- 6 070 052**

## Description

La présente invention concerne le domaine des radiocommunications, notamment des réseaux de télécommunication interactif faisant intervenir ou intégrant des satellites, et plus particulièrement la gestion de la disponibilité des ressources et services pour les différents utilisateurs d'un tel réseau.

La présente invention a pour objet un procédé de gestion des ressources radio, notamment de la disponibilité de telles ressources, dans un réseau du type précité, ainsi qu'un réseau et un terminal pour la mise en oeuvre d'un tel procédé.

Dans les systèmes ou réseaux de radiocommunications, tels que notamment un système de télécommunications par satellites, une question majeure se posant lors de la conception concerne la disponibilité des ressources et services, qui fait partie de la qualité du service fourni à l'utilisateur final. Ainsi, plusieurs aspects doivent être considérés afin de permettre la prédiction des paramètres de propagation, nécessaires en particulier lors de l'étude de systèmes Terre-espace.

La recommandation ITU-R P.618-5 présente la liste des effets à considérer et le modèle à utiliser pour prendre ceux-ci en compte lors de l'étude de tels systèmes. De manière habituelle, on établit une marge fixe dans le budget des liaisons par ciel clair dans le pire cas d'utilisation du système, de manière à compenser par anticipation des dégradations telles qu'une atténuation due à la pluie ou bien une perte d'espace libre, conformément à la disponibilité visée du système et à la zone climatique.

Dans une zone de service de plusieurs centaines de kilomètres de diamètre, les conditions de propagation peuvent être fortement différentes et évoluer différemment dans le temps d'un emplacement à l'autre à l'intérieur de ladite zone couverte par le système. Une marge fixe implique que la capacité des canaux est insuffisamment utilisée pendant un pourcentage de temps considérablement élevé.

Cependant, il existe des situations où la philosophie de conception d'une marge fixe du budget des liaisons est très insatisfaisante, et un exemple caractéristique est celui des systèmes de communications interactifs par satellites dans la bande Ku ou Ka.

Le document = US 6,070,052 décrit un système d'allocation de ressources aux stations sol d'un système de télécommunications par satellite. Selon l'enseignement de ce document, l'allocation de ressources impliquerait une combinaison de raisonnement « probabilistique » ou prédictif, et de raisonnement « utilitaire » basé sur des mesures des performances du réseau selon des préférences prédéterminées du système.

Cependant, la partie prédictive se repose sur une mémoire de l'historique des demandes d'allocations et des performances du système. Le système ainsi fait est donc mal adapté pour faire face à des variations physiques affectant la capacité des ressources, par exemple des conditions de propagation telles que l'atténuation atmosphérique ou autres.

En considérant la variabilité des conditions de propagation d'un emplacement à l'autre conduisant à un type de multiplexage statistique des atténuations, une manière efficace peut consister à utiliser une marge partagée entre les terminaux actifs, à l'intérieur de la zone de service, afin de réduire la marge établie pour contrer l'évanouissement ("fading"). Cette marge est en général dimensionnée en supposant un faible nombre de terminaux dans des conditions pluvieuses à l'intérieur de la zone de service.

Cependant, cette solution n'empêche pas les terminaux subissant une profonde atténuation d'affecter la qualité du service observée par les terminaux rattachés à la même ressource dans des conditions de ciel clair, ou bien une dégradation de service grave et déséquilibrée lorsque le nombre de terminaux sous la pluie dépasse le nombre utilisé pour le dimensionnement de la marge, cette dernière pouvant éventuellement résulter d'analyses statistiques à long terme.

La présente invention vise notamment à pallier les inconvénients précités, en aidant à gérer la consommation de la marge partagée globale en respectant au mieux les consignes de qualité de service et de disponibilité des ressources pour chaque terminal.

A cet effet, la présente invention a pour objet un procédé de gestion des ressources radio dans un réseau de télécommunication interactif comprenant une pluralité de terminaux partageant à plusieurs une même ressource radio parmi celles disponibles, et préférentiellement du type comprenant au moins un satellite, caractérisé en ce qu'il consiste à gérer, en transmission montante et/ou en transmission descendante, les ressources et services de communication allouées par le réseau à un terminal $t_i$ donné connecté, en fonction de la valeur d'un produit $\alpha^{(i)}$ du type :

$$\alpha^{(i)} = \text{bande passante } r_i \times \text{puissance } p_i,$$

pour ledit terminal $t_i$, avec $i$ variant de 1 à N, où N est le nombre total de terminaux dans la zone de service considérée.

Préférentiellement le terme bande passante $r_i$ correspond à la bande passante équivalente cumulée des

connexions du terminal $t_i$, estimée lors de l'acceptation de la communication ou connexion concernée, et le terme puissance $p_i$ correspond à la consommation moyenne du terminal $t_i$, la valeur de $p_i$ étant déterminée périodiquement.

Conformément à un mode de réalisation préféré de l'invention, l'allocation des ressources et services de communication à un terminal $t_i$ connecté est fonction du résultat de la comparaison de la valeur calculée du produit $\alpha^{(i)}$ avec une valeur seuil $\alpha^{(i)}_{lim}$ correspondant, sous forme de produit maximum bande passante $r_i$ par puissance $p_i$, à la quantité de ressources radio réservée pour l'acceptation de la connexion, augmentée d'une marge supplémentaire permettant d'atteindre la disponibilité de service désirée ou fixée pour ledit terminal $t_i$.

Ainsi, le procédé de gestion consiste lorsque la valeur du produit $\alpha^{(i)}$ devient supérieure à celle du produit $\alpha^{(i)}_{lim}$, à réduire la bande passante équivalente $r_i$ attribuée au terminal $t_i$ d'un facteur $\alpha^{(i)} / \alpha^{(i)}_{lim}$ (division de $r_i$ par ce dernier facteur) et, pour un terminal $t_i$ comportant plusieurs connexions à classes de services différentes, à partager la réduction de bande passante équivalente entre les différentes connexions, de manière aléatoire ou selon un ordre hiérarchique prédéterminé.

Ainsi, il pourra être prévu, par exemple, de réduire prioritairement la ou les bande(s) passante(s) de la ou des connexion(s) utilisant le plus de ressources radio ou de celles présentant des qualités de services réduites.

En cas de réduction importante de la bande passante, il peut arriver que cette dernière ne suffise plus à justifier le maintien de la connexion concernée.

Il peut ainsi être prévu que la connexion soit coupée ou libérée lorsque la bande passante équivalente de cette dernière chute en-dessous d'une valeur seuil inférieur $r_{min}$, correspondant par exemple au débit binaire minimum attribué à un terminal $t_i$ pour la connexion considérée.

Le procédé de gestion consiste également, après une réduction préalable de la bande passante équivalente $r_i$ d'un terminal $t_i$, à rétablir progressivement ladite bande passante équivalente $r_i$ à sa valeur normale avant réduction, lorsque la valeur du produit $\alpha^{(i)}$ redevient inférieure à celle du produit $\alpha^{(i)}_{lim}$.

Afin de tenir également compte de la situation d'ensemble en termes de capacité des ressources radio, il est avantageusement prévu une seconde phase de vérification et d'adaptation consistant, pour une ressource radio donnée, telle qu'une porteuse, partagée par un groupe $G_j$ de plusieurs terminaux $t_i$, à gérer globalement les ressources et les services de communication alloués par le réseau aux terminaux $t_i$ dudit groupe $G_j$ en fonction de la valeur d'un paramètre $\alpha^{Tj}$ donné par la formule :

$$\alpha^{Tj} = \sum_{G(j)} r_i x p_i .$$

Cette phase opératoire additionnelle consiste plus précisément, lorsque la valeur du paramètre $\alpha^{Tj}$ devient supérieure à une valeur seuil $\alpha^{(Tj)}_{lim}$ correspondant à la capacité de la ressource radio commune partagée par les terminaux $t_i$ du groupe $G_j$, à réduire, uniformément ou de manière différenciée ou pondérée, la bande passante équivalente $r_i$ de tous les terminaux $t_i$ dudit groupe $G_j$.

Préférentiellement, la réduction de la bande passante équivalente $r_i$ de tous les terminaux $t_i$ du groupe $G_j$ s'effectue avec un facteur $\alpha^{Tj} / \alpha^{(Tj)}_{lim}$ (division de $r_i$ par ce dernier facteur).

Pour limiter la baisse de la qualité du service fourni au strict nécessaire, il peut être prévu d'appliquer la réduction de bande passante équivalente, de manière aléatoire ou hiérarchiquement prédéterminée, successivement à différents terminaux $t_i$ du groupe $G_j$, à recalculer le produit $\alpha^{Tj}$ après chaque réduction de bande passante équivalente $r_i$ d'un terminal $t_i$ et à arrêter la poursuite de l'application de ladite réduction de bande passante équivalente audit groupe $G_j$ dès que l'inéquation suivante est vérifiée :

$$\alpha^{Tj} \leq \alpha^{(Tj)}_{lim}.$$

Lorsque pour tous les terminaux $t_i$ du groupe $G_j$ les bandes passantes équivalentes $r_i$ deviennent, après réduction, égales à leurs débits binaires minimums respectifs et que l'inéquation précitée n'est toujours pas vérifiée, il ne reste plus qu'à choisir aléatoirement les terminaux $t_i$ à déconnecter du réseau.

La mise en oeuvre du procédé de gestion selon l'invention dans sa variante de réalisation la plus complète consiste à réaliser cycliquement, dans un premier temps, une gestion individuelle des bandes passantes $r_i$ des différents terminaux $t_i$, connectés audit réseau par ledit au moins un satellite et, dans un second temps, une gestion globale ou groupée des terminaux $t_i$ des différents groupes $G_j$ associés chacun à une ressource radio partagé.

De manière préférée, on appliquera ce procédé à un réseau de télécommunication multimédia par satellites, du type à accès multiple par différence de code et avec adaptation automatique de la puissance de transmission de et vers chaque terminal aux conditions de propagation, comme expliqué plus en détails ci-après.

La mise en oeuvre dudit procédé repose sur la capacité des algorithmes ayant la charge d'allouer des ressources radio en vue d'une transmission de données de trafic, à appliquer cette réduction. Par exemple, des algorithmes à permutation circulaire pondérée ou des algorithmes de mise en file d'attente équitable pondérée sont compatibles et utilisables avec un tel procédé.

On notera que le procédé de gestion selon l'invention repose sur plusieurs critères fondamentaux et visent à atteindre différents objectifs, à savoir :

- isolement entre les terminaux : une forte dégradation de la propagation de la voie radioélectrique d'un terminal n'affectera pas les terminaux partageant la même ressource radio (porteuse par exemple).
- équité : un manque de capacité sera assumé également entre les terminaux.
- garantie de débit binaire minimum : même dans le cas d'une éventualité d'un évanouissement profond, le terminal peut conserver une connexion à débit binaire minimum.

En se fondant sur ces trois points, il est possible de définir deux types de disponibilités :

- la disponibilité de service : il s'agit du pourcentage de temps durant lequel le système ou réseau est accessible, avec des performances nominales. Ceci signifie que durant ce temps, le système doit respecter les exigences en qualité de service.
- la disponibilité d'accès au système : il s'agit du pourcentage de temps durant lequel le système ou réseau est accessible, même avec des performances réduites, la cause de la dégradation de la liaison peut provenir des altérations de la propagation telles qu'une atténuation ou une scintillation due à une forte pluie.

La présente invention a également pour objet un système ou réseau de radiocommunication interactif par satellites fournissant des connexions et des voies de communication à une pluralité de terminaux, mobiles ou fixes, partageant à plusieurs une même ressource radio parmi celles mises à disposition par le réseau, caractérisé en ce que, en transmission montante et/ou en transmission descendante, les ressources et services de communication alloués à un terminal $t_i$ donné sont gérés en fonction de la valeur d'un produit $\alpha^{(i)}$ du type :

$$\alpha(i) = \text{bande passante } r_i \text{ x puissance } p_i,$$

pour ledit terminal $t_i$.

Préférentiellement, ce système mettra en oeuvre le procédé de gestion tel que décrit ci-dessus et illustré ci-après dans une application particulière et, pour ce faire, comportera, outre des moyens de mise en place de passerelles adaptées à un trafic multimédia par paquets entre les terminaux situés dans différentes zones de service et une base ou un réseau central(e) et des moyens de commande des ressources radio fournissant notamment une fonction de commande d'acceptation de connexion, une fonction de commande d'accès au support et une fonction de commande de puissance, également des moyens de gestion de marges réalisant l'adaptation, continue ou par paliers, des bandes passantes équivalentes pendant l'existence des connexions en fonction des valeurs $\alpha^{(i)}$ et $\alpha^{Tj}$ correspondantes calculées.

Avantageusement, il comprendra également au moins un moyen superviseur de trafic destiné à redistribuer les ressources radio allouées à chaque passerelle de communication en transmission descendante, ainsi qu'une interface de signalisation logique spécifique par terminal $t_i$ pour la réalisation de l'adaptation des bandes passantes équivalentes et la transmission de l'information correspondante au moyen superviseur de trafic.

Enfin, l'invention concerne également un terminal fixe ou mobile de télécommunication faisant partie d'un système ou réseau du type précité et adapté pour la mise en oeuvre du procédé décrit dans la présente.

Dans ce qui suit, la présente invention en relation avec un exemple d'application pratique non limitatif, mais constituant néanmoins une variante de réalisation préférée intégrée à un système de communications par satellites à base de paquets fondé sur une architecture générique du type suivant.

Une passerelle prend place à l'intérieur d'une zone de service et a la charge de transporter un trafic de données et/ou un trafic vocal entre des terminaux situés dans la zone de service et un réseau central. Elle accepte un trafic multimédia à base de paquets et met en jeu plusieurs fonctions de manière à fournir une qualité de service pour le transport sur la connexion. Elle définit le partage des ressources radio entre les terminaux et la commande des ressources radio, en respectant les exigences en qualité de service.

Trois fonctions principales pilotent l'utilisation des ressources radio : la commande d'acceptation de connexion (CAC), la commande d'accès au support (MAC) et la commande de puissance.

La commande d'admission de connexion est chargée de la commande des ressources radio et décide de l'acceptation d'une connexion au moment de l'établissement de la connexion. La capacité prise pour hypothèse par cette fonction prend en compte une marge globale partagée par les terminaux dont l'acheminement se fait sur la même ressource radio (porteuse ou ensemble de porteuses), de manière à prendre la contre-mesure d'un évanouissement sans dégradation du service.

La commande de puissance mesure la qualité de la liaison pour chaque terminal et adapte la demande de puissance de chaque terminal de manière à maintenir le taux d'erreur requis des cellules sur la transmission physique.

La commande d'accès au support est chargée d'allouer une ressource radio sur une base par paquets. Elle implique des algorithmes de charge de porteuse, des superviseurs pour les obligations de qualité de service et un protocole d'accès de retour fondé sur un accès multiple avec affectation à la demande (DAMA), dont les constitutions et les modes de fonctionnement sont connus de l'homme du métier.

Au principe précédent, une quatrième fonction appelée gestionnaire de marge a été ajoutée de manière à adapter la bande passante équivalente durant la vie de la connexion conformément à la stratégie décrite dans les paragraphes suivants.

A titre de variante de réalisation pratique, on décrira ci-après de manière détaillée une implémentation du procédé selon l'invention appliquée plus particulièrement à une liaison "passerelle vers terminal" et, de manière plus sommaire à une liaison "terminal vers passerelle".

La puissance est établie sur une base de terminal mais la bande passante équivalente est établie sur une base de connexion. Les explications suivantes décrivent en détail la réduction ou l'augmentation de la bande passante équivalente globale pour le terminal et le partage entre les connexions d'un terminal donné.

I) Liaison passerelle vers terminal

Les notations suivantes sont utilisées ci-après :

- $r_i$ : bande passante équivalente du $i^{ième}$ terminal, laquelle est la somme de la bande passante équivalente des connexions estimées par la fonction CAC pour l'acceptation de l'appel.

- $\alpha^{(i)}$ : produit réel bande passante par puissance du $i^{ième}$ terminal. Il est calculé à partir de la consommation moyenne de puissance et est rafraîchi dès qu'une nouvelle valeur de consommation moyenne de puissance est disponible.

- $\alpha_{lim}^{(i)}$ : produit maximum bande passante par puissance du $i^{ième}$ terminal. Il correspond à la quantité de ressources radio réservées par la fonction CAC destinée à l'acceptation de la connexion augmentée de la marge de puissance supplémentaire nécessaire pour atteindre la disponibilité de service pour le $i^{ième}$ terminal, ce qui peut être considéré comme une marge individuelle virtuelle.

- $\alpha^T$ : produit global bande passante par puissance, pour la totalité des terminaux de la porteuse. Il est donné par

$$\alpha^T = \sum_{SKT} r_i \cdot p_i \, .$$

- $\alpha_{lim}^T$ : produit maximum bande passante par puissance de la porteuse. Il correspond à la capacité de la porteuse.
- $p_i$ : consommation moyenne de puissance du $i^{ième}$ terminal. Elle est calculée périodiquement à partir de l'ensemble des puissances donné par la fonction de commande de puissance.
- $r_{min}$ : débit binaire minimum offert à chaque terminal.

Diminution de capacité

La première étape réalise une vérification individuelle de $\alpha^{(i)}$ vis-à-vis de $\alpha_{lim}^{(i)}$. Lorsque la valeur actuelle de $\alpha^{(i)}$ dépasse la limite pour un terminal, la bande passante équivalente $r_i$ associée est réduite d'un facteur $\alpha^{(i)}/\alpha_{lim}^{(i)}$, cette réduction peut être opérée de façon continue ou par étapes discrètes de manière à simplifier la mise en oeuvre.

Lorsque la bande passante équivalente chute au-dessous de $r_{min}$, la passerelle n'est plus capable de maintenir un canal à débit binaire minimum et le terminal est déconnecté du système.

La seconde étape réalise une vérification globale de la valeur actuelle de $\alpha^T$ vis-à-vis de $\alpha_{lim}^T$. Lorsque la valeur actuelle de $\alpha^T$ dépasse la limite pour la porteuse, la bande passante équivalente de tout l'ensemble des terminaux de la porteuse est réduite avec un facteur $\alpha^T/\alpha_{lim}^T$. Pour les terminaux au-dessous de $r_{min}$, la passerelle n'est plus capable de maintenir le canal à débit binaire minimum et le terminal est déconnecté du système.

Cette seconde étape est fondée sur l'hypothèse radio prise pour établir la marge collective. Le dimensionnement ne suppose qu'un petit nombre de terminaux sous la pluie, ce qui peut être considéré comme un facteur d'activité sous la pluie par terminal. Cette hypothèse conduit à une marge collective beaucoup plus faible que la marge individuelle pour atteindre la même disponibilité. Cependant, le nombre de terminaux "sous la pluie" est parfois plus élevé que le nombre utilisé pour le dimensionnement de la marge. Dans ce cas, le traitement collectif réduit la bande passante équivalente, même si chaque terminal "sous la pluie" n'a pas complètement consommé sa marge individuelle.

La réduction de bande passante est appliquée sur la bande passante équivalente cumulée d'un terminal et cette réduction doit être partagée entre les connexions du terminal.

Ainsi, pour un terminal qui comporte plusieurs connexions à classes de services différentes, notre proposition est de libérer tout d'abord progressivement les connexions à hautes performances. Si cela n'est pas suffisant, la bande passante équivalente des connexions qui ne sont pas en temps réel est progressivement réduite, et lorsque la bande passante équivalente d'une connexion chute au-dessous de $r_{min}$, la connexion est libérée. Si cela n'est pas suffisant, la bande passante équivalente des connexions en temps réel est progressivement réduite jusqu'à $r_{min}$ afin de maintenir le canal à taux binaire minimum.

Par contre, pour un terminal qui ne possède qu'une seule connexion à hautes performances, la bande passante équivalente est déjà établie à $_{min}$ et dans ce cas, le terminal est déconnecté uniquement lorsque le produit global bande passante par puissance dépasse $\alpha_{lim}^{T}$.

Par ailleurs, durant la seconde étape, il peut arriver que la réduction de bande passante équivalente d'un petit nombre de terminaux soit suffisante pour ramener le produit global bande passante par puissance à $\alpha_{lim}^{T}$. La seconde étape démarrera avec une sélection aléatoire du terminal à traiter.

Augmentation de capacité

Une chute de capacité peut être considérée comme un événement transitoire. Ainsi, avec la fin de l'événement d'évanouissement ou d'absorption, la capacité augmente et le système revient dans un état de disponibilité de services. La bande passante équivalente réduite durant la chute de capacité sera rétablie à ses valeurs normales.

La première étape consiste à réaliser une vérification individuelle du $\alpha^{(i)}$ actuel vis-à-vis de $\alpha_{lim}^{(i)}$. Lorsque la valeur actuelle de $\alpha^{(i)}$ devient inférieure à la limite pour le terminal, la bande passante équivalente associée est rétablie à la bande passante équivalente nominale établie par la fonction CAC.

La seconde étape réalise une vérification globale du $\alpha^{T}$ actuel vis-à-vis de $\alpha_{lim}^{T}$. Lorsque la valeur actuelle de $\alpha^{T}$ devient inférieure à la limite pour la porteuse, la bande passante équivalente des terminaux est progressivement rétablie à la valeur nominale établie par la fonction CAC.

Le traitement du cas de diminution et d'augmentation de capacité peut être réalisé automatiquement par un programme adapté qui gère la modification de bande passante équivalente des terminaux et peut, par exemple, présenter la structure algorithmique ci-dessous.

Traitement individuel

1) Calcul de $\alpha^{(i)}$ :

$$\alpha^{(i)} = r_i^{*} \cdot p_i$$

où $r_i^{*}$ est la bande passante équivalente nominale établie par la fonction CAC. $r_i^{*} = r_i$ lorsque les marges de puissance ne sont pas consommées, mais $r_i^{*} > r_i$ dans les autres cas, donc $r_i^{*}$ doit être mémorisé de manière à être capable de rétablir $r_i$ à sa valeur d'origine après la chute de capacité.

2) Si $\alpha^{(i)} > \alpha_{lim}^{(i)}$, nous sommes dans un accès à la disponibilité du système. Une bande passante équivalente réduite $r_i$ est calculée par :

$$r_i = r_i^{*} \cdot \alpha \frac{\alpha_{lim}^{(i)}}{\alpha^{(i)}}$$

Si $r_i < r_{min}$, le terminal est déconnecté du réseau d'accès.

3) Si $\alpha^{(i)} \leq \alpha_{lim}^{(i)}$, $r_i$ est rétabli à sa valeur nominale $r_i^{*}$.

Traitement collectif

1) Calcul de $\alpha_1^T$ et $\alpha_2^T$ (à chaque cycle horloge) :

$$\alpha_1^T = \sum_{SKT} r_i^* \cdot p_i \quad \text{et} \quad \alpha_2^T = \sum_{SKT} \overline{r_i \cdot p_i}$$

2) Si $\alpha_2^T < \alpha_{lim}^T$, suite aux nouvelles valeurs de $r_i$ définies au cours du traitement individuel et des nouvelles valeurs de $p_i$, alors les bandes passantes $r_i$ ne sont pas modifiées.

3) Si $\alpha_2^T \geq \alpha_{lim}^T$, alors on calcule, pour tous les terminaux $t_i$, une nouvelle valeur pour les bandes passantes $r_i$ telle que :

$$r_i' = r_i \times \alpha \frac{\alpha_{lim}^T}{\alpha_2^T}$$

Un terminal $t_i$ est Déconnecté, lorsque $r_i' <_{min}$.

A chaque détermination d'un nouveau $r_i'$, une nouvelle valeur de $\alpha_2^T$ est recalculée et la détermination d'un nombre $r_i'$ est poursuivie tant que l'inéquation $\alpha_2^T < \alpha_{lim}^T$ n'est pas vérifiée. L'avantage de cette solution est de pouvoir borner le temps de traitement en fonction du nombre total de terminaux à traiter (traitement en temps réel).

En variante, il peut être prévu, à chaque déconnexion d'un terminal $t_i$, de recalculer $\alpha_2^T$ en tenant uniquement compte de cette déconnexion (on reprend les valeurs $r_i$ et on ne tient pas compte des valeurs $r_i'$ calculées jusqu'à ce stade) et de relancer la totalité du traitement.

4) Si $\alpha_1^T > \alpha_{lim}^T$, nous sommes dans un accès à la disponibilité du système. Un terminal est choisi pour lequel une bande passante équivalente réduite $r_i$ est calculée par :

$$r_i = r_i^* \cdot \frac{\alpha_{lim}^T}{\alpha^T}$$

La réduction est appliquée successivement pour les terminaux, mais après chaque calcul d'une bande passante équivalente réduite, $\alpha_1^T$ doit être recalculé grâce à

$$\alpha_1^T = \sum_{SKT} \overline{r_i \cdot p_i} \; .$$

Lorsque $\alpha_1^T$ devient inférieur à $\alpha_{lim}^T$, la réduction de bande passante équivalente est arrêtée. Si pour chaque i, $r_i = r_{min}$, on effectue un choix aléatoire afin de sélectionner les terminaux à déconnecter.

5) Si $\alpha_2^T \leq \alpha_{lim}^T$ et $\alpha_1^T > \alpha_{lim}^T$, $r_i$ est rétabli à sa valeur nominale $r_i^*$. Ce rétablissement est exécuté successivement pour les terminaux qui présentent une bande passante équivalente réduite. Après chaque rétablissement d'une bande passante équivalente, $\alpha^T$ doit être recalculé grâce à

$$\alpha^T = \sum_{SKT} r_i \cdot p_i \; .$$

Lorsque $\alpha^T$ devient supérieur à $\alpha_{lim}^T$, le rétablissement de la bande passante équivalente est arrêté.

6) Si $\alpha_1^T \leq \alpha_{lim}^T$, tous les $r_i$ sont rétablis à leur valeur nominale $r_i^*$.

II. Liaison terminal vers passerelle

La méthode proposée peut être la même que celle décrite précédemment pour la liaison passerelle vers terminal et reposer sur la conservation du produit bande passante par puissance.

Cependant, en raison de la problématique des accès multiples, le terminal peut impliquer un superviseur de trafic de manière à redistribuer les ressources radio allouées par la passerelle en vue d'une transmission de données de trafic sur la liaison passerelle vers terminal. Une interface de signalisation logique particulière sera construite entre la passerelle et le terminal de manière à rendre efficace la réduction de la bande passante équivalente et afin d'informer l'algorithme du superviseur de trafic du terminal de la réduction de $r_i$.

La stratégie de retour est en général imposée par la contrainte d'avoir un coût en capacité très faible pour la transmission du message informant le terminal de la réduction de la bande passante équivalente. Un nombre réduit d'étapes de diminution ou d'augmentation sera en général obtenu.

La gestion des deux types de liaisons(montante et descendante) pourra être réalisée soit séparément, soit de manière plus ou moins imbriquée.

Ainsi, selon une première variante de réalisation de l'invention, la gestion des ressources radio en liaison montante et la gestion des ressources radio en liaison descendante sont réalisées de manière indépendante l'une de l'autre, à l'exception des cas de déconnexion de terminaux ($t_i$) dont les conséquences sont prises en compte dans les deux gestions précitées.

Selon une dernière variante de réalisation, le procédé peut consister à effectuer, en premier lieu, la gestion des ressources radio en liaison montante, puis, en second lieu, la gestion des ressources radio en liaison descendante, ou vice versa, en tenant compte des déconnexions résultant de la gestion effectuée en premier lieu, et, ensuite, à effectuer à nouveau la gestion effectuée en premier lieu en tenant compte des éventuelles déconnexions intervenues au cours de la gestion effectuée en second lieu.

Enfin selon une troisième variante de réalisation, il peut être prévu de corréler entre elles les gestions des ressources radio en liaisons montante et descendante, en réduisant notamment les bandes passantes ($r_i$) d'un terminal ($t_i$) donné de la même manière dans les deux directions de transmission.

Bien entendu, l'invention n'est pas limitée au mode de réalisation décrit. Des modifications restent possibles, notamment du point de vue de la constitution des divers éléments ou par substitution d'équivalents techniques, sans sortir pour autant du domaine de protection de l'invention défini par les revendications.

**Revendications**

**1.** Procédé de gestion des ressources radio dans un réseau de télécommunication interactif comprenant une pluralité de terminaux partageant à plusieurs une même ressource radio parmi celles disponibles, et préférentiellement du type comprenant au moins un satellite, **caractérisé en ce qu'**il consiste à gérer, en transmission montante et/ou en transmission descendante, les ressources et services de communication allouées par le réseau à un terminal ($t_i$) donné connecté, en fonction de la valeur d'un produit ($\alpha^{(i)}$) du type :

$$\alpha^{(i)} = \text{bande passante } (r_i) \text{ x puissance } (p_i),$$

pour ledit terminal ($t_i$), où
le terme bande passante ($r_i$) correspond à la bande passante équivalente cumulée des connexions du terminal ($t_i$), estimée lors de l'acceptation de la communication ou connexion concernée, et le terme puissance ($p_i$) correspond à la consommation moyenne du terminal ($t_i$), la valeur de ($p_i$) étant déterminée périodiquement.

**2.** Procédé selon la revendication 1, **caractérisé en ce que** l'allocation des ressources et services de communication à un terminal ($t_i$) connecté est fonction du résultat de la comparaison de la valeur calculée du produit ($\alpha^{(i)}$) avec une valeur seuil ($\alpha^{(i)}_{lim}$ correspondant, sous forme de produit maximum bande passante ($r_i$) par puissance ($p_i$), à la quantité de ressources radio réservée pour l'acceptation de la connexion, augmentée d'une marge supplémentaire permettant d'atteindre la disponibilité de service désirée ou fixée pour ledit terminal ($t_i$).

**3.** Procédé selon la revendication 2, **caractérisé en ce qu'**il consiste, lorsque la valeur du produit ($\alpha^{(i)}$) devient supérieure à celle du produit ($\alpha^{(i)}_{lim}$), à réduire la bande passante équivalente ($r_i$) attribuée au terminal ($t_i$) d'un facteur $\alpha^{(i)} / \alpha^{(i)}_{lim}$.

**4.** Procédé selon la revendication 3, **caractérisé en ce qu'**il consiste, pour un terminal ($t_i$) comportant plusieurs connexions à classes de services différentes, à partager la réduction de bande passante équivalente entre les différentes connexions, de manière aléatoire ou selon un ordre hiérarchique prédéterminé.

**5.** Procédé selon l'une quelconque des revendications 3 et 4, **caractérisé en ce qu'**une connexion est coupée ou libérée lorsque la bande passante équivalente de cette dernière chute en-dessous d'une valeur seuil inférieur ($r_{min}$), correspondant par exemple au débit binaire minimum attribué à un terminal ($t_i$) pour la connexion considérée.

**6.** Procédé selon l'une quelconque des revendications 3 à 5, **caractérisé en ce qu'**il consiste, après une réduction préalable de la bande passante équivalente ($r_i$) d'un terminal ($t_i$), à rétablir progressivement ladite bande passante équivalente ($r_i$) à sa valeur normale avant réduction, lorsque la valeur du produit ($\alpha^{(i)}$) redevient inférieure à celle du produit ($\alpha_{lim}^{(i)}$).

**7.** Procédé selon l'une quelconque des revendications 1 à 6, **caractérisé en ce qu'**il consiste également, pour une ressource radio donnée, telle qu'une porteuse, partagée par un groupe ($G_j$) de plusieurs terminaux ($t_i$), à gérer globalement les ressources et les services de communication alloués par le réseau aux terminaux ($t_i$) dudit groupe ($G_j$) en fonction de la valeur d'un paramètre ($\alpha^{Tj}$) donné par la formule :

$$\alpha^{Tj} = \sum_{G(j)} r_i \, x p_i \, .$$

**8.** Procédé selon la revendication 7, **caractérisé en ce qu'**il consiste, lorsque la valeur du paramètre ($\alpha^{Tj}$) devient supérieure à une valeur seuil ($\alpha_{lim}^{(Tj)}$) correspondant à la capacité de la ressource radio commune partagée par les terminaux ($t_i$) du groupe ($G_j$), à réduire, uniformément ou de manière différenciée ou pondérée, la bande passante équivalente ($r_i$) de tous les terminaux ($t_i$) dudit groupe ($G_j$).

**9.** Procédé selon la revendication 8, **caractérisé en ce que** la réduction de la bande passante équivalente ($r_i$) de tous les terminaux ($t_i$) du groupe ($G_j$) s'effectue avec un facteur $\alpha^{Tj} / \alpha_{lim}^{(Tj)}$.

**10.** Procédé selon l'une quelconque des revendications 8 et 9, **caractérisé en ce qu'**il consiste à appliquer la réduction de bande passante équivalente, de manière aléatoire ou hiérarchiquement prédéterminée, successivement à différents terminaux ($t_i$) du groupe ($G_j$), à recalculer le produit ($\alpha^{Tj}$) après chaque réduction de bande passante équivalente ($r_i$) d'un terminal ($t_i$) et à arrêter la poursuite de l'application de ladite réduction de bande passante équivalente audit groupe ($G_j$) dès que l'inéquation suivante est vérifiée :

$$\alpha^{Tj} \leq \alpha_{lim}^{(Tj)}.$$

**11.** Procédé selon l'une quelconque des revendications 8 à 10, **caractérisé en ce qu'**il consiste, lorsque pour tous les terminaux ($t_i$) du groupe ($G_j$) les bandes passantes équivalentes ($r_i$) deviennent, après réduction, égales à leurs délits binaires minimums respectifs et que l'inéquation $\alpha^{Tj} \leq \alpha_{lim}^{(Tj)}$ n'est toujours pas vérifiée, à choisir aléatoirement les terminaux ($t_i$) à déconnecter du réseau.

**12.** Procédé selon l'une quelconque des revendications 7 à 11, **caractérisé en ce qu'**il consiste à réaliser cycliquement, dans un premier temps, une gestion individuelle des bandes passantes ($r_i$) des différents terminaux ($t_i$), connectés audit réseau par ledit au moins un satellite et, dans un second temps, une gestion globale ou groupée des terminaux ($t_i$) des différents groupes ($G_j$) associés chacun à une ressource radio partagé.

**13.** Procédé selon l'une quelconque des revendications 1 à 12, **caractérisé en ce que** le réseau consiste en un réseau de télécommunication multimédia par satellites, du type à accès multiple par différence de code et avec adaptation automatique de la puissance de transmission de et vers chaque terminal aux conditions de propagation.

**14.** Procédé selon l'une quelconque des revendications 1 à 13, **caractérisé en ce que** la gestion des ressources radio en liaison montante et la gestion des ressources radio en liaison descendante sont réalisées de manière indépendante l'une de l'autre, à l'exception des cas de déconnexion de terminaux ($t_i$) dont les conséquences sont prises en compte dans les deux gestions précitées.

**15.** Procédé selon l'une quelconque des revendications 1 à 13, **caractérisé en ce qu'**il consiste à effectuer, en premier lieu, la gestion des ressources radio en liaison montante, puis, en second lieu, la gestion des ressources radio en liaison descendante, ou vice versa, en tenant compte des déconnexions résultant de la gestion effectuée en premier lieu, et, ensuite, à effectuer à nouveau la gestion effectuée en premier lieu en tenant compte des éventuelles déconnexions intervenues au cours de la gestion effectuée en second lieu.

**16.** Procédé selon l'une quelconque des revendications 1 à 13, **caractérisé en ce qu'**il consiste à corréler entre elles les gestions des ressources radio en liaisons montante et descendante, en réduisant notamment les bandes passantes ($r_i$) d'un terminal ($t_i$) donné de la même manière dans les deux directions de transmission.

**17.** Réseau de radiocommunication interactif par satellites fournissant des connexions et des voies de communication à une pluralité de terminaux fixes ou mobiles, partageant à plusieurs une même ressource radio parmi celles mises à disposition par le réseau, **caractérisé en ce que**, en transmission montante et/ou en transmission descendante, les ressources et services de communication allouées à un terminal ($t_i$) donné sont gérés en fonction de la valeur d'un produit ($\alpha^{(i)}$) du type :

$$\alpha(i) = \text{bande passante } (r_i) \times \text{puissance } (p_i),$$

pour ledit terminal ($t_i$), où le terme bande passante ($r_i$) correspond à la bande passante équivalente cumulée des connexions du terminal ($t_i$), estimée lors de l'acceptation de la communication ou connexion concernée, et le terme puissance ($p_i$) correspond à la consommation moyenne du terminal ($t_i$), la valeur de ($p_i$) étant déterminée périodiquement.

**18.** Réseau selon la revendication 17, **caractérisé en ce qu'**il met en oeuvre le procédé de gestion selon l'une quelconque des revendications 1 à 13.

**19.** Réseau selon l'une quelconque des revendications 17 et 18, **caractérisé en ce qu'**il comporte, outre des moyens de mise en place de passerelles adaptées à un trafic multimédia par paquets entre les terminaux situés dans différentes zones de service et une base ou un réseau central (e) et des moyens de commande des ressources radio fournissant notamment une fonction de commande d'acceptation de connexion, une fonction de commande d'accès au support et une fonction de commande de puissance, également des moyens de gestion de marges réalisant l'adaptation, continue ou par paliers, des bandes passantes équivalentes pendant l'existence des connexions en fonction des valeurs ($\alpha^{(i)}$) et ($\alpha^{Tj}$) correspondantes calculées.

**20.** Réseau selon l'une quelconque des revendications 17 à 19, **caractérisé en ce qu'**il comprend également au moins un moyen superviseur de trafic destiné à redistribuer les ressources radio allouées à chaque passerelle de communication en transmission descendante, ainsi qu'une interface de signalisation logique spécifique par terminal ($t_i$) pour la réalisation de l'adaptation des bandes passantes équivalentes et la transmission de l'information correspondante au moyen superviseur de trafic.

**21.** Terminal fixe ou mobile de télécommunication, **caractérisé en ce qu'**il fait partie d'un réseau de radiocommunication interactif par satellites fournissant des connexions et des voies de communication à une pluralité de terminaux fixes ou mobiles, partageant à plusieurs une même ressource radio parmi celles mises à disposition par le réseau, **caractérisé en ce que**, en transmission montante et/ou en transmission descendante, les ressources et services de communication allouées à un terminal ($t_j$) donné sont gérés en fonction de la valeur d'un produit ($\alpha^{(i)}$) du type :
$\alpha^{(i)} = \text{bande passante } (r_i) \times \text{puissance } (p_i)$,
pour ledit terminal ($t_i$), où le terme bande passante ($r_i$) correspond à la bande passante équivalente cumulée des connexions du terminal ($t_j$), estimée lors de l'acceptation de la communication ou connexion concernée, et le terme puissance ($p_i$) correspond à la consommation moyenne du terminal ($t_i$), la valeur de ($p_i$) étant déterminée périodiquement, et **en ce qu'**il est adapté pour la mise en oeuvre d'un procédé de gestion des ressources radio dans un réseau de télécommunication interactif comprenant une pluralité de terminaux partageant à plusieurs une même ressource radio panni celles disponibles, et préférentiellement du type comprenant au moins un satellite, **caractérisé en ce qu'**il consiste à gérer, en transmission montante et/ou en transmission descendante, les ressources et services de communication allouées par le réseau à un terminal ($t_j$) donné connecté, en fonction de la valeur d'un produit ($\alpha^{(i)}$) du type :
$\alpha^{(i)} = \text{bande passante } (r_i) \times \text{puissance } (p_i)$,
pour ledit terminal ($t_i$), où
le terme bande passante ($r_i$) correspond à la bande passante équivalente cumulée des connexions du terminal ($t_i$), estimée lors de l'acceptation de la communication ou connexion concernée, et le terme puissance ($p_i$) correspond à la consommation moyenne du terminal ($t_i$), la valeur de ($p_i$) étant déterminée périodiquement.

**22.** Terminal fixe ou mobile de télécommunication, **caractérisé en ce qu'**il fait partie d'un réseau selon l'une quelconque des revendications 17 à 20 et **en ce qu'**il est adapté pour la mise en oeuvre du procédé de gestion selon l'une quelconque des revendications 1 à 16.

## Claims

1. A method of managing radio resources in an interactive telecommunication network which includes a plurality of terminals severally sharing the same available radio resource and is preferably of the type including at least one satellite, **characterized in that** communication services and resources allocated by the network to a given connected terminal ($t_i$) for uplink and/or downlink transmission are managed as a function of the value of a product ($\alpha^{(i)}$) of the type:

    ($\alpha^{(i)}$) = bandwidth ($r_i$) x power ($p_i$),

    for said terminal ($t_i$), where

    the bandwidth term ($r_i$) corresponds to the cumulative equivalent bandwidth of the connections of the terminal ($t_i$), estimated at the time of accepting the call or connection concerned and the power term ($p_i$) corresponds to the average consumption of the terminal ($t_i$), the value of ($p_i$) being determined periodically.

2. A method according to claim 1, **characterized in that** the allocation of communication services and resources to a connected terminal ($t_i$) is a function of the result of comparing the calculated value of the product ($\alpha^{(i)}$), subject to a corresponding threshold value ($\alpha^{(i)}_{lim}$) in the form of a maximum bandwidth ($r_i$) $\times$ power ($p_i$) product, with the quantity of radio resources reserved for accepting the connection, augmented by a supplementary margin for achieving the availability of service required or fixed for said terminal ($t_i$).

3. A method according to claim 2, **characterized in that** the equivalent bandwidth ($r_i$) allocated to the terminal ($t_i$) is reduced by a factor $\alpha^{(i)} / \alpha^{(i)}_{lim}$ if the value of the product ($\alpha^{(i)}$) becomes greater than that of the product ($\alpha^{(i)}_{lim}$).

4. A method according to claim 3, **characterized in that**, for a terminal ($t_i$) having a plurality of connections with different classes of service, the equivalent bandwidth reduction is shared between the various connections at random or in accordance with a predetermined hierarchical order.

5. A method according to claim 3 or claim 4, **characterized in that** a connection is cut off or cleared down if its equivalent bandwidth falls below a lower threshold value ($r_{min}$) corresponding to the minimum binary bit rate allocated to a terminal ($t_i$) for the connection concerned, for example.

6. A method according to any of claims 3 to 5, **characterized in that**, after the equivalent bandwidth ($r_i$) of a terminal ($t_i$) has been reduced beforehand, said equivalent bandwidth ($r_i$) is progressively returned to its normal value before reduction if the value of the product ($\alpha^{(i)}$) becomes less than that of the product ($\alpha^{(i)}_{lim}$) again.

7. A method according to any of claims 1 to 6, **characterized in that**, for a given radio resource, such as a carrier, shared by a group ($G_j$) of several terminals ($t_i$), the communication services and resources allocated by the network to the terminals ($t_i$) of said group ($G_j$) are managed globally as a function of the value of a parameter ($\alpha^{Ti}$) defined by the equation:

$$\alpha^{Tl} = \sum_{G(i)} r_i x p_i \ .$$

8. A method according to claim 7, **characterized in that** the equivalent bandwidth ($r_i$) of all the terminals ($t_i$) of said group ($G_j$) is reduced uniformly or in a differentiated manner or in a weighted manner if the value of the parameter ($\alpha^{Tj}$) exceeds a threshold value ($\alpha^{(Tj)}_{lim}$) corresponding to the capacity of the common radio resource shared by the terminals ($t_i$) of the group ($G_j$).

9. A method according to claim 8, **characterized in that** the equivalent bandwidth ($r_i$) of all the terminals ($t_i$) of the group ($G_j$) is reduced by a factor $\alpha^{Tj} / \alpha^{(Tj)}_{lim}$.

10. A method according to claim 8 or claim 9, **characterized in that** the equivalent bandwidth reduction is applied in a random or hierarchically predetermined manner to different terminals ($t_i$) of the group ($G_j$) in succession, the product ($\alpha^{Tj}$) is calculated again after each reduction of the equivalent bandwidth ($r_i$) for a terminal ($t_i$), and continued

application of said equivalent bandwidth reduction to said group ($G_j$) is halted immediately the following condition is verified: $\alpha^{Tj} \leq \alpha_{\lim}^{(Tj)}$.

11. A method according to any of claims 8 to 10, **characterized in that**, if the equivalent bandwidths ($r_i$) are reduced until they are equal to their respective minimum binary bit rates and the condition $\alpha^{Tj} \leq \alpha_{\lim}^{(Tj)}$ is still not verified, for all the terminals ($t_i$) of the group ($G_j$), the terminals ($t_i$) to be disconnected from the network are chosen at random.

12. A method according to any of claims 7 to 11, **characterized in that**, in a cyclic process, the bandwidths ($r_i$) of the various terminals ($t_i$) connected to said network via said at least one satellite are managed individually at a first stage and the terminals ($t_i$) of the groups ($G_j$) each associated with a shared radio resource are managed globally or in a grouped manner at a second stage.

13. A method according to any of claims 1 to 12, **characterized in that** the network is a code division multiple access satellite multimedia telecommunication network with automatic matching of the power transmitted from and to each terminal to the propagation conditions.

14. A method according to any of claims 1 to 13, **characterized in that** the uplink radio resource and downlink radio resource management processes are independent of each other except in the situation of disconnection of terminals ($t_i$), the consequences of which are taken into account in the two management processes.

15. A method according to any of claims 1 to 13, **characterized in that** the uplink radio resources are managed at a first stage and the downlink radio resources are managed at a second stage, or vice versa, taking into account disconnections resulting from the management process performed first, after which the management process performed first is performed again, taking into account any disconnections that have occurred during the management process performed second.

16. A method according to any of claims 1 to 13, **characterized in that** uplink radio resource management and downlink radio resource management are correlated, in particular by reducing the bandwidths ($r_i$) of a given terminal ($t_i$) in the same manner in both transmission directions.

17. An interactive satellite radiocommunication network providing communication channels and connections to a plurality of fixed or mobile terminals severally sharing the same radio resource made available by the network, **characterized in that** communication services and resources allocated to a given terminal ($t_i$) for uplink and/or downlink transmission are managed as a function of the value of a product ($\alpha^{(i)}$) of the type:

$$\alpha^{(i)} = \text{bandwidth } (r_i) \text{ x power } (p_i),$$

for said terminal ($t_i$), where the bandwidth term ($r_i$) corresponds to the cumulative equivalent bandwidth of the connections of the terminal ($t_i$), estimated at the time of acceptance of the call or connection concerned, and the power term ($p_i$) corresponds to the average consumption of the terminal ($t_i$), the value of ($p_i$) being determined periodically.

18. Network according to claim 17, **characterized in that** it uses the management method according to any of claims 1 to 13.

19. A network according to claim 17 or claim 18, **characterized in that** it includes means for providing gateways suitable for packet-based multimedia traffic between terminals in different service areas, a central network or a base (e) and radio resource control means providing in particular a connection acceptance control function, a media access control function, and a power control function, and means for managing margins which adapt equivalent bandwidths continuously or in a stepwise manner during the existence of connections as a function of the corresponding calculated values ($\alpha^{(i)}$) and ($\alpha^{Tj}$).

20. A network according to any of claims 17 to 19, **characterized in that** it further includes at least one traffic supervisor means adapted to redistribute the radio resources allocated to each downlink transmission communication gateway and a dedicated logical signaling interface for each terminal ($t_i$) for adapting equivalent bandwidths and transmitting corresponding information to the traffic supervisor means.

**21.** A fixed or mobile telecommunication terminal, **characterized in that** it forms part of an interactive satellite radio communication network providing communication channels and connections to a plurality of fixed or mobile terminals, several of which share the same radio resource from among those made available by the network, **characterized in that**, in uplink transmission and/or in downlink transmission, the communication resources and services assigned to a given terminal ($t_i$) are managed as a function of the value of a product ($\alpha^{(i)}$) of the type:

$\alpha^{(i)}$ = bandwidth ($r_i$) $\times$ power ($p_i$),

for said terminal ($t_i$), where the bandwidth term ($r_i$) corresponds to the cumulative equivalent bandwidth of the connections of the terminal ($t_i$), estimated at the time of acceptance of the call or connection concerned, and the power term ($p_i$) corresponds to the average consumption of the terminal ($t_i$), the value of ($p_i$) being determined periodically, and **in that** it is adapted to implement a method of managing radio resources in an interactive telecommunication network comprising a plurality of terminals several of which shore the same radio resource from among those available, and preferably of the type comprising at least one satellite, **characterized in that** it consists in managing, for uplink transmission and/or downlink transmission, the communication resources and services assigned by the network to a given connected terminal ($t_i$), as a function of the value of a product ($\alpha^{(i)}$) of the type:

$\alpha^{(i)}$ = bandwidth ($r_i$) $\times$ power ($p_i$),

for said terminal ($t_i$), where the bandwidth term ($r_i$) corresponds to the cumulative equivalent bandwidth of the connections of the terminal ($t_i$), estimated at the time of acceptance of the call or connection concerned, and the power term ($p_i$) corresponds to the average consumption of the terminal ($t_i$), the value of ($p_i$) being determined periodically.

**22.** Fixed or mobile telecommunication terminal **characterized in that** it forms part of a network according to any of claims 17 to 20 and **in that** it is adapted to implement the management method according to any of claims 1 to 16.

**Patentansprüche**

**1.** Verfahren zur Steuerung der Funkmittel in einem interaktiven Telekommunikationsnetz, umfassend eine Vielzahl von Endgeräten, die sich zu mehreren dasselbe Funkmittel unter den verfügbaren teilen, und vorzugsweise von der Art, dass es mindestens einen Satelliten umfasst, **dadurch gekennzeichnet, dass** es darin besteht, in der Aufwärtsübertragung und/oder in der Abwärtsübertragung die Kommunikationsmittel und -dienste zu steuern, die einem gegebenen verbundenen Endgerät ($t_i$) vom Netz zugewiesen werden, und zwar in Abhängigkeit vom Wert eines Produkts ($\alpha^{(i)}$) des Typs:

$$(\alpha^{(i)}) = \text{Bandbreite } (r_i) \times \text{Leistung } (p_i)$$

für das genannte Endgerät ($t_i$), wobei der Term Bandbreite ($r_i$) der kumulierten äquivalenten Bandbreite des Endgeräts ($t_i$) entspricht, die bei der Annahme der betreffenden Kommunikation oder Verbindung geschätzt wurde, und der Term Leistung ($p_i$) dem mittleren Verbrauch des Endgeräts ($t_i$) entspricht, wobei der Wert von ($p_i$) in regelmäßigen Abständen bestimmt wird.

**2.** Verfahren nach Anspruch 1, **dadurch gekennzeichnet, dass** die Zuweisung der Kommunikationsmittel und -dienste an ein verbundenes Endgerät ($t_i$) abhängig vom Ergebnis des Vergleichs des berechneten Wertes des Produkts ($\alpha^{(i)}$) mit einem Schwellenwert ($\alpha^{(i)}_{lim}$) ist, welcher in Form des maximalen Produkts von Bandbreite ($r_i$) mal Leistung ($p_i$) der Menge der Funkmittel entspricht, die für die Annahme der Verbindung reserviert sind, erhöht um eine zusätzliche Spanne, mit deren Hilfe die Verfügbarkeit des gewünschten oder für das genannte Endgerät ($t_i$) festgelegten Dienstes erreicht werden kann.

**3.** Verfahren nach Anspruch 2, **dadurch gekennzeichnet, dass** dann, wenn der Wert des Produkts ($\alpha^{(i)}$) größer wird als jener des Produkts ($\alpha^{(i)}_{lim}$), dieses Verfahren darin besteht, die dem Endgerät ($t_i$) zugewiesene äquivalente Bandbreite ($r_i$) um einen Faktor ($\alpha^{(i)} / \alpha^{(i)}_{lim}$) zu verringern.

**4.** Verfahren nach Anspruch 4, **dadurch gekennzeichnet, dass** bei einem Endgerät ($t_i$), das mehrere Verbindungen zu unterschiedlichen Dienstklassen aufweist, dieses Verfahren darin besteht, die Verringerung der äquivalenten Bandbreite unter den verschiedenen Verbindungen nach Zufallsprinzipien oder nach einer zuvor festgelegten hierarchischen Rangfolge aufzuteilen.

**5.** Verfahren nach einem beliebigen der Ansprüche 3 und 4, **dadurch gekennzeichnet, dass** eine Verbindung unterbrochen oder freigegeben wird, wenn die äquivalente Bandbreite von letzterer unter einen unteren Schwellenwert ($r_{min}$) fällt, der zum Beispiel der Mindestübertragungsgeschwindigkeit entspricht, die einem Endgerät ($t_i$) für die betrachtete Verbindung zugewiesen wurde.

**6.** Verfahren nach einem beliebigen der Ansprüche 3 bis 5, **dadurch gekennzeichnet, dass** es darin besteht, nach einer vorherigen Verringerung der äquivalenten Bandbreite ($r_i$) eines Endgeräts ($t_i$) diese äquivalente Bandbreite ($r_i$) mit ihrem normalen Wert vor der Verringerung wiederherzustellen, wenn der Wert des Produkts ($\alpha^{(i)}$) kleiner wird als jener des Produkts($\alpha^{(i)}_{lim}$).

**7.** Verfahren nach einem beliebigen der Ansprüche 1 bis 6, **dadurch gekennzeichnet, dass** es auch drin besteht, für ein gegebenes Funkmittel wie beispielsweise eine Trägerwelle, die von einer Gruppe ($G_j$) mehrerer Endgeräte ($t_i$) gemeinsam genutzt wird wird, global die Kommunikationsmittel und -dienste zu steuern, die vom Netz den Endgeräten ($t_i$) dieser Gruppe ($G_j$) in Abhängigkeit vom Wert eines Parameters ($\alpha^{Tj}$) zugewiesen werden, der gegeben ist durch die Formel:

$$\alpha^{Tj} = \sum_{G(j)} r_i x p_i.$$

**8.** Verfahren nach Anspruch 7, **dadurch gekennzeichnet, dass** dann, wenn der Wert des Parameters ($\alpha^{Tj}$) größer wird als ein Schwellenwert ($\alpha^{(Tj)}_{lim}$), welcher der Leistungsfähigkeit des von den Endgeräten ($t_i$) der Gruppe ($G_j$) gemeinsam genutzten Funkmittels entspricht, dieses Verfahren darin besteht, die äquivalente Bandbreite ($r_i$) aller Endgeräte ($t_i$) der genannten Gruppe ($G_j$) gleichmäßig oder in differenzierter oder gewichteter Weise zu verringern.

**9.** Verfahren nach Anspruch 8, **dadurch gekennzeichnet, dass** die Verringerung der äquivalenten Bandbreite ($r_i$) aller Endgeräte ($t_i$) der Gruppe ($G_j$) um einen Faktor ($\alpha^{Tj}/\alpha^{(Tj)}_{lim}$) erfolgt.

**10.** Verfahren nach einem beliebigen der Ansprüche 8 und 9, **dadurch gekennzeichnet, dass** es darin besteht, die Verringerung der äquivalenten Bandbreite nach Zufallsprinzipien oder in einer zuvor festgelegten hierarchischen Weise nacheinander auf verschiedene Endgeräte ($t_i$) der Gruppe ($G_i$) anzuwenden, das Produkt ($\alpha^{Tj}$) nach jeder Verringerung der äquivalenten Bandbreite ($r_i$) eines Endgeräts ($t_i$) neu zu berechnen und die weitere Anwendung dieser Verringerung der äquivalenten Bandbreite auf diese Gruppe ($G_j$) zu beenden, sobald die folgende Ungleichung verifiziert ist:

$$\alpha^{Tj} \leq \alpha^{(Tj)}_{lim}.$$

**11.** Verfahren nach einem beliebigen der Ansprüche 8 bis 10, **dadurch gekennzeichnet, dass** dann, wenn für alle Endgeräte ($t_i$) der Gruppe ($G_j$) die äquivalenten Bandbreiten ($r_i$) nach der Verringerung gleich groß wie ihre jeweiligen Mindestübertragungsraten werden und wenn die Ungleichung $\alpha^{Tj} \leq \alpha^{(Tj)}_{lim}$ immer noch nicht verifiziert ist, dieses Verfahren darin besteht, die vom Netz zu trennenden Endgeräte ($t_i$) nach Zufallsprinzipien auszuwählen.

**12.** Verfahren nach einem beliebigen der Ansprüche 7 bis 11, **dadurch gekennzeichnet, dass** es darin besteht, auf zyklische Weise in einem ersten Durchgang eine individuelle Steuerung der Bandbreiten ($r_i$) der verschiedenen Endgeräte ($t_i$) durchzuführen, die durch den genannten mindestens einen Satelliten mit dem Netz verbunden sind, und in einem zweiten Durchgang eine globale oder in Gruppen zusammengefasste Steuerung der Endgeräte ($t_i$) der verschiedenen Gruppen ($G_j$), von denen jede einem gemeinsam genutzten Funkmittel zugeordnet ist.

**13.** Verfahren nach einem beliebigen der Ansprüche 1 bis 12, **dadurch gekennzeichnet, dass** das Netz aus einem satellitengestützten Multimedia-Telekommunikationsnetz mit Codemultiplexzugriff sowie mit automatischer Anpassung der Übertragungsleistung von und zu jedem Endgerät an die Ausbreitungsbedingungen besteht.

**14.** Verfahren nach einem beliebigen der Ansprüche 1 bis 13, **dadurch gekennzeichnet, dass** die Steuerung der Funkmittel in der Aufwärtsverbindung und die Steuerung der Funkmittel in der Abwärtsverbindung voneinander unabhängig durchgeführt werden, mit Ausnahme der Fälle der Verbindungstrennung von Endgeräten ($t_i$), deren Folgen in beiden zuvor genannten Steuerungsarten berücksichtig werden.

**15.** Verfahren nach einem beliebigen der Ansprüche 1 bis 13, **dadurch gekennzeichnet, dass** es darin besteht, als Erstes die Steuerung der Funkmittel in der Aufwärtsverbindung und danach als Zweites die Steuerung der Funkmittel in der Abwärtsverbindung durchzuführen, oder umgekehrt, und zwar unter Berücksichtigung der Verbindungstrennungen, die sich aus der als Erstes durchgeführten Steuerung ergeben, sowie dadurch, anschließend erneut die als Erstes durchgeführte Steuerung durchzuführen und dabei eventuelle Verbindungstrennungen zu berücksichtigen, die im Verlauf der als Zweites durchgeführten Steuerung eingetreten sind.

**16.** Verfahren nach einem beliebigen der Ansprüche 1 bis 13, **dadurch gekennzeichnet, dass** es darin besteht, die Steuerungen der Funkmittel in der Aufwärts- und der Abwärtsverbindung miteinander zu korrelieren, indem insbesondre die Bandbreiten ($r_i$) eines gegebenen Endgeräts ($t_i$) in beiden Übertragungsrichtungen auf dieselbe Weise verringert werden.

**17.** Satellitengestütztes interaktives Funkverkehrsnetz, welches Kommunikationsverbindungen und -kanäle für eine Vielzahl von festen oder mobilen Endgeräten bereitstellt, die gemeinsam zu mehreren dasselbe Funkmittel unter denjenigen nutzen, die vom Netz zur Verfügung gestellt werden, **dadurch gekennzeichnet, dass** die einem gegebenen Endgerät ($t_i$) in der Aufwärtsübertragung und/oder Abwärtsübertragung zugewiesenen Kommunikationsmittel und -dienste für dieses Endgerät ($t_i$) in Abhängigkeit vom Wert eines Produkts gesteuert werden, das dem Typ entspricht:

$$(\alpha^{(i)}) = \text{Bandbreite } (r_i) \times \text{Leistung } (p_i),$$

wobei der Term Bandbreite ($r_i$) der kumulierten äquivalenten Bandbreite des Endgeräts ($t_i$) entspricht, die bei der Annahme der betreffenden Kommunikation oder Verbindung geschätzt wurde, und der Term Leistung ($p_i$) dem mittleren Verbrauch des Endgeräts ($t_i$) entspricht, wobei der Wert von ($p_i$) in regelmäßigen Abständen bestimmt wird.

**18.** Netz nach Anspruch 17, **dadurch gekennzeichnet, dass** es das Steuerungsverfahren nach einem beliebigen der Ansprüche 1 bis 13 anwendet.

**19.** Netz nach einem beliebigen der Ansprüche 17 und 18, **dadurch gekennzeichnet, dass** es außerdem Vorrichtungen zur Implementierung von Gateways aufweist, die an einen paketvermittelten Multimediaverkehr zwischen den in unterschiedlichen Dienstzonen liegenden Endgeräten angepasst sind, sowie eine zentrale Basiseinrichtung oder ein zentrales Netz und Vorrichtungen zur Steuerung der Funkmittel, die insbesondere eine Steuerungsfunktion für die Verbindungsannahme, eine Steuerungsfunktion für den Zugang zum Träger und eine Leistungssteuerungsfunktion liefern, sowie auch Vorrichtungen zur Steuerung von Spannen, welche die kontinuierliche oder stufenweise Anpassung der äquivalenten Bandbreiten während des Bestehens der Verbindungen in Abhängigkeit von den entsprechenden berechneten Werten ($\alpha^{(i)}$) und ($\alpha^{(Tj)}$) durchführen.

**20.** Netz nach einem beliebigen der Ansprüche 17 bis 19, **dadurch gekennzeichnet, dass** es ebenso mindestens eine Verkehrsüberwachungsvorrichtung umfasst, die dazu bestimmt ist, die jedem Kommunikations-Gateway bei der Abwärtsübertragung zugewiesenen Funkmittel neu zu verteilen, sowie eine spezifische logische Signalisierungsschnittstelle pro Endgerät ($t_i$) für die Durchführung der Anpassung der äquivalenten Bandbreiten und die Übertragung der entsprechenden Information an die Verkehrsüberwachungsvorrichtung.

**21.** Festes oder mobiles Telekommunikations-Endgerät, **dadurch gekennzeichnet, dass** es Teil eines satellitengestützten interaktiven Funkverkehrsnetzes ist, welches Kommunikationsverbindungen und -kanäle für eine Vielzahl von festen oder mobilen Endgeräten bereitstellt, die gemeinsam zu mehreren dasselbe Funkmittel unter denjenigen nutzen, die vom Netz zur Verfügung gestellt werden, **dadurch gekennzeichnet, dass** die einem gegebenen Endgerät ($t_i$) in der Aufwärtsübertragung und/oder Abwärtsübertragung zugewiesenen Kommunikationsmittel und -dienste für dieses Endgerät ($t_i$) in Abhängigkeit vom Wert eines Produkts gesteuert werden, das dem Typ entspricht:

$$(\alpha^{(i)}) = \text{Bandbreite } (r_i) \times \text{Leistung } (p_i),$$

wobei der Term Bandbreite ($r_i$) der kumulierten äquivalenten Bandbreite des Endgeräts ($t_i$) entspricht, die bei der Annahme der betreffenden Kommunikation oder Verbindung geschätzt wurde, und der Term Leistung ($p_i$)

dem mittleren Verbrauch des Endgeräts ($t_i$) entspricht, wobei der Wert von ($p_i$) in regelmäßigen Abständen bestimmt wird, sowie dadurch, dass es für die Anwendung eines Verfahrens zur Steuerung der Funkmittel in einem interaktiven Telekommunikationsnetz angepasst ist, welches eine Vielzahl von Endgeräten aufweist, die sich zu mehreren dasselbe Funkmittel unter den verfügbaren teilen, und vorzugsweise von der Art, dass es mindestens einen Satelliten umfasst, **dadurch gekennzeichnet, dass** es darin besteht, in der Aufwärtsübertragung und/oder in der Abwärtsübertragung die Kommunikationsmittel und -dienste zu steuern, die einem gegebenen verbundenen Endgerät ($t_i$) vom Netz zugewiesen werden, und zwar in Abhängigkeit vom Wert eines Produkts ($\alpha^{(i)}$) des Typs:

$$(\alpha^{(i)}) = \text{Bandbreite } (r_i) \times \text{Leistung } (p_i)$$

für das genannte Endgerät ($t_i$), wobei
der Term Bandbreite ($r_i$) der kumulierten äquivalenten Bandbreite des Endgeräts ($t_i$) entspricht, die bei der Annahme der betreffenden Kommunikation oder Verbindung geschätzt wurde, und der Term Leistung ($p_i$) dem mittleren Verbrauch des Endgeräts ($t_i$) entspricht, wobei der Wert von ($p_i$) in regelmäßigen Abständen bestimmt wird.

22. Festes oder mobiles Telekommunikationsendgerät, **dadurch gekennzeichnet, dass** es Teil eines Netzes nach einem beliebigen der Ansprüche 17 bis 20 ist und dadurch, dass es für die Anwendung des Steuerungsverfahrens nach einem beliebigen der Ansprüche 1 bis 16 angepasst ist.